# EUROPÄISCHE PATENTSCHRIFT

(11) **EP 1 219 163 B1**
(45) Veröffentlichungstag und Bekanntmachung des Hinweises auf die Patenterteilung: **03.05.2006**
(21) Anmeldenummer: 01129630.8
(22) Anmeldetag: 12.12.2001
(51) Int. Cl.: A01F 12/40, A01F 29/00

(54) **Häckselvorrichtung**
Chopping device
Dispositif hacheur

(30) Priorität: 20.12.2000 DE 10063554
(43) Veröffentlichungstag der Anmeldung: 03.07.2002
(73) Patentinhaber: DEERE & COMPANY, Moline, Illinois 61265-8098 (US)
(72) Erfinder: Büermann, Martin, Dr., 89437 Haunsheim (DE); Hirsch, Walter, 66459 Kirkel/Limbach (DE); Belter, Adolf, 01309 Dresden (DE); Bernhardt, Gerd, Prof. Dr., 01728 Bannewitz/Hänichen (DE); Firus, Siegried, Dr., 01259 Dresden (DE); Heinrich, André, 02708 Löbau (DE)
(74) Vertreter: Holst, Sönke

(56) Entgegenhaltungen:
- EP-A- 0 164 489
- EP-A- 0 631 717
- BE-A- 526 170
- DE-A- 3 324 467
- DE-C- 577 081
- DE-U- 20 010 221
- FR-A- 2 586 525
- GB-A- 1 534 800
- US-A- 5 775 991
- US-A- 6 070 816

## Beschreibung

Die Erfindung betrifft eine Häckselvorrichtung mit mehreren Messern, die an einem drehbaren, innerhalb eines Gehäuses angeordneten Körper befestigt sind, wobei die radial äußeren Enden der Messer an einer ersten Position des Körpers weniger weit von der Drehachse des Körpers beabstandet sind als an einer zweiten, von der ersten Position beabstandeten Position des Körpers.

In der DE 43 21 905 A ist ein Anbauhäcksler für einen Mähdrescher beschrieben, der in seinem grundsätzlichen Aufbau aus einem Strohhäcksler mit horizontaler Drehachse besteht, der das ihm zugeführte Stroh in an sich bekannter Weise häckselt. Das Stroh wird anschließend durch Übergabetrichter Wurfgebläsen mit vertikalen Drehachsen zugeführt, die es auf das Feld auswerfen.

Die DE 44 31 802 A schlägt einen Anbauhäcksler vor, bei dem das Stroh durch eine horizontale Förderschnecke von oben einem Rotorgehäuse mit einem das Stroh zerkleinernden und gleichzeitig ausfördernden, zylindrischen Häckselrotor mit vertikaler Drehachse zugeführt wird. Das gehäckselte Stroh verlässt das Rotorgehäuse durch daran angeschlossene Auswurfstutzen, die um eine vertikale Achse schwenkbar sind.

In der DE 197 53 486 A ist eine Häckselvorrichtung offenbart, die ebenfalls einen zylindrischen Häckselrotor zum Häckseln und Auswerfen des Guts aufweist, der um eine vertikale Drehachse rotiert. Das Gut wird dem Häckselrotor tangential zugeführt.

Ein Vorteil der Verwendung von Häckselrotoren mit vertikalen Drehachsen besteht darin, dass die durch den Häckselrotor auf das Häckselgut übertragene kinetische Energie zum Auswerfen und seitlichen Verteilen des Häckselguts auf dem Feld dienen kann. Problematisch ist jedoch eine axiale Zuführung des Häckselguts in den relativ engen Spalt zwischen Rotor und Gehäuse. Bei der Häckselvorrichtung der DE 197 53 486 A wird eine tangentiale Zuführung verwendet, während beim Anbauhäcksler der DE 44 31 802 A eine Förderschnecke erforderlich ist.

Die DE 33 24 467 A beschreibt eine Zerkleinerungseinrichtung für Halmgut, bei der innerhalb eines sich konisch erweiternden Gehäuses eine Welle mit daran pendelnd aufgehängten Werkzeugen angeordnet ist.

Die Werkzeuge sind stirnseitig angeschliffen und bilden mit dem Gehäuse einen Spalt, dessen Größe in axialer Richtung der Welle konstant bleibt. An der Innenseite des Gehäuses sind Leisten angebracht, die einen spiralförmigen Pfad bilden. Die Verteilung der Werkzeuge um die Welle in der Drehrichtung wird nicht näher beschrieben. Hier erhöht sich die Geschwindigkeit der Werkzeuge in axialer Richtung zunehmend. Die Werkzeuge tragen aber nicht zur Förderung des Ernteguts in axialer Richtung bei.

Die der Erfindung zugrunde liegende Aufgabe wird darin gesehen, eine Häckselvorrichtung mit hoher Wurfweite des Häckselgutes zu schaffen, die verbesserte Zuführeigenschaften aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Messer werden derart auf einem zentralen, durch einen Antrieb in Drehung versetzbaren Körper befestigt, dass die radial äußeren Enden der Messer in Abhängigkeit von ihrer axialen Position auf dem Körper unterschiedlich weit von der Drehachse des Körpers beabstandet sind. Die radial äußeren Enden der Messer sind somit über wenigstens einen Teilbereich der Länge des Körpers in Form eines Konus angeordnet. Das radial äußere Ende eines beispielsweise an einem ersten Ende des Körpers angeordneten Messers ist somit relativ nahe an der Drehachse. Die in axialer Richtung nachfolgenden Messer sind weiter von der Drehachse entfernt. Auf diese Weise erreicht man, dass die Umfangsgeschwindigkeit der Messer ansteigt, je weiter das jeweilige Messer vom ersten Ende des Körpers entfernt ist. Das Häckselgut wird somit, wenn es dem ersten Ende des Körpers axial, tangential oder radial zugeführt wird, relativ langsam aufgenommen, bei seiner Bewegung über die Länge der Häckselvorrichtung durch die auf es einwirkenden Messer beschleunigt und schließlich ausgeworfen. Gleichzeitig wird es durch die Messer, die starr oder pendelnd am Körper aufgehängt sein und mit Gegenmessern zusammenwirken können, zerhäckselt. Es wird vorgeschlagen, dass die Messer auf dem Körper in Spiralform, d. h. in Drehrichtung azimutal und axial wendelförmig zueinander versetzt angebracht sind, so dass sie die Förderung des Häckselguts in axialer Richtung unterstützen.

Die erfindungsgemäße Anordnung der Messer verbessert im Ergebnis die Zuführeigenschaften der Häckselvorrichtung, da das Häckselgut beim Zuführen keine große Geschwindigkeitsänderung erfährt. Findet die Häckseleinrichtung bei einem Mähdrescher Verwendung, erübrigt sich auch bei axialer Zuführung ein separates, angetriebenes Förderelement zwischen den Strohschüttlern oder den Trennrotoren des Mähdreschers und der Häckselvorrichtung. Es ist aber auch denkbar, ein derartiges Förderelement zu verwenden, das beispielsweise als Gurtförderer, Förderwalze, Förderwalzenpaar oder das Häckselgut seitlich zusammenführender Schneckenförderer ausgeführt sein kann.

Wenn die radial äußeren Enden der Messer in der Form eines Konus angeordnet sind, sind die Enden der Messer um so weiter von der Drehachse entfernt, je weiter das jeweilige Messer axial vom ersten Ende des Körpers beabstandet ist. Dadurch erzielt man eine kontinuierliche Beschleunigung des Häckselguts auf seinem Weg entlang der axialen Länge des Körpers.

Eine konische oder auf andere Weise variierende Anordnung der Enden der Messer lässt sich grundsätzlich auf drei Arten erreichen. Die Messer können an einem kreiszylindrischen Körper befestigt werden, wobei die Länge der Messer und/oder die Länge von Haltern, die am Körper befestigt sind und die (in der Regel gleichartigen) Messer haltern, in axialer Richtung variiert, insbesondere sukzessive ansteigt. Diese Halter können schaufelförmig gestaltet sein, um einen Luftstrom zu erzeugen. Alternativ können gleichartige Messer Verwendung finden, die an einem konischen Körper angebracht und wegen ihrer Gleichartigkeit aus Kostengründen bevorzugt sind. Bei einem konischen Körper ist als weiterer Vorteil anzusehen, dass sich weniger Häckselgut zwischen den äußeren Enden der Messer und dem Körper ansammeln kann, da die Messer kürzer dimensioniert werden können.

Die Drehachse des Körpers ist vorzugsweise wenigstens näherungsweise vertikal oder zumindest gegenüber der Horizontalen geneigt. Man erreicht dadurch, dass das Gut horizontal ausgeworfen und in seitlicher Richtung homogen auf einem Feld verteilt wird, ohne dass eine (energieaufwändige) Umlenkung des Flusses des Häckselguts stattfinden muss.

Das Häckselgut wird vorzugsweise an dem Ende des Konus zugeführt, das die kleineren Abmessungen hat. Es kann axial, radial oder tangential zugeführt werden. Insbesondere kann das Material in den Spalt zwischen dem vom rotierenden Körper beschriebenen Umkreis und dem Gehäuse eingeführt werden, wobei ein beträchtlicher Teil der mit Messern versehenen Länge des Körpers (oder die gesamte Länge) das Gut aus seitlicher Richtung her annehmen kann.

Insbesondere bei axialer Zufuhr des zu häckselnden Materials können am eingangsseitigen Ende des Körpers angeordnete Schneidelemente die Annahme des Materials verbessern, indem sie die ankommende Gutmatte abfräsen.

In einer bevorzugten Ausführungsform ist das Gehäuse der Häckselvorrichtung mit einem oder mehreren rohrförmigen Auswurfstutzen versehen, durch die das Häckselgut ausgeworfen wird. Der oder die Auswurfstutzen sind in der Regel dem Ende des Konus benachbart, das die größere radiale Abmessung aufweist. Alternativ erstreckt sich die Höhe des Auswurfstutzens über die gesamte Höhe des Körpers mit den daran angebrachten Messern. Der Körper und die daran angebrachten Messer können eine zum Auswurfstutzen gerichtete tangentiale Luftströmung erzeugen, die das Auswerfen des gehäckselten Materials erleichtert.

Der Auswurfstutzen kann um eine vertikale Achse schwenkbar sein, um das Häckselgut nacheinander in jeweils andere Richtungen auszuwerfen. Die Schwenkbewegung kann kontinuierlich erfolgen, um das Häckselgut über die Breite des von einem Mähdrescher aufgenommenen Schwads zu verteilen. Denkbar ist auch, den oder die Auswurfstutzen anhand der Windrichtung oder der Geländeneigung zu verschwenken und jeweils an einer anhand gemessener oder von einem Bediener eingegebener Bedingungen festgelegten Position stehen zu lassen.

Falls die Kapazität einer Häckselvorrichtung mit einem Körper und daran angebrachten Messern nicht ausreichen sollte, bietet sich an, zwei Körper seitlich nebeneinander anzubringen. Ihre Drehachsen können parallel oder relativ zueinander geneigt verlaufen. Dabei ist denkbar, die Körper in ein gemeinsames Gehäuse einzubauen, oder zwei getrennte Gehäuse zu verwenden.

In einer bevorzugten Ausführungsform ist dem Ende des Konus mit größeren radialen Abmessungen ein Gebläse benachbart. Letzteres ist mit Schaufeln versehen, die um dieselbe Achse rotieren wie die Messer. Das Gebläse beschleunigt das Häckselgut und verbessert das Auswerfen. Denkbar ist, anstelle eines separaten Gebläses, oder zusätzlich dazu, am größeren Ende des Konus Auswurfschaufeln anzubringen. Deren Länge und/oder Position kann variierbar sein, was durch geeignete Verstelleinrichtungen manuell, fernbedient bzw. selbsttätig durch eine Steuerung erfolgen kann. Auch bei dieser Ausführungsform kann das Häckselgut durch schwenkbare bzw. starre Auswurfstutzen ausgeworfen werden, die dem Gebläse bzw. den Auswurfschaufeln benachbart sind.

Die Schaufeln können durch ein zwischen Körper und Gebläse geschaltetes Getriebe angetrieben werden, so dass sie eine andere (in der Regel niedrigere) Drehzahl als der Körper aufweisen. Außerdem können die Schaufeln des Gebläses an ihren Außenseiten mit Messern versehen sein, die vorzugsweise mit am Gehäuse angebrachten Gegenmessern zusammenwirken. Dadurch erreicht man eine Verbesserung der Häckselwirkung.

Zusätzlich kann das Gebläse einen Luftstrom in axialer Richtung erzeugen, so dass das Häckselgut an der Zuführöffnung des Gehäuses der Häckselvorrichtung bereits angesaugt und in axialer Richtung durch die Häckselvorrichtung hindurch gefördert wird. Auch die Form der am Körper befestigten Messer kann derart gewählt werden, dass sie einen axialen Luftstrom erzeugen.

Weiterhin ist vorgeschlagen, am zuführungsseitigen Ende des Körpers, also an dem die kleinere radiale Abmessung aufweisenden Ende des Konus, eine Einzugswendel anzuordnen, die den Einzug des Häckselguts verbessert. Derartige Einzugswendel sind an sich beispielsweise von Axialtrennrotoren bekannt.

Das Gehäuse der Häckselvorrichtung ist vorzugsweise zumindest teilweise der Form des Konus angepasst, so dass das Häckselgut einen Spalt etwa konstanter Abmessung zwischen Gehäuse und den Messern durchläuft und dort gehäckselt wird. An der Innenseite des Gehäuses können Leitbleche angebracht sein, die Häckselgut und Luft in axialer bzw. spiralförmiger Richtung leiten.

In den Zeichnungen sind sieben nachfolgend näher beschriebene Ausführungsbeispiele der Erfindung dargestellt. Es zeigt:
- Fig. 1: eine Erntemaschine mit einer ersten Ausführungsform einer erfindungsgemäßen Häckselvorrichtung;
- Fig. 2: eine rückwärtige Ansicht der Häckselvorrichtung der Figur 1;
- Fig. 3: eine Draufsicht auf die Häckselvorrichtung der Figur 1;
- Fig. 4: eine Seitenansicht einer zweiten Ausführungsform der Häckselvorrichtung;
- Fig. 5: eine Seitenansicht einer dritten Ausführungsform einer Häckselvorrichtung;
- Fig. 6: eine Seitenansicht einer vierten Ausführungsform einer Häckselvorrichtung;
- Fig. 7: eine Seitenansicht einer fünften Ausführungsform einer Häckselvorrichtung;
- Fig. 8: eine Seitenansicht einer sechsten Ausführungsform einer Häckseleinrichtung; und
- Fig. 9: eine Seitenansicht einer siebten Ausführungsform einer Häckseleinrichtung.

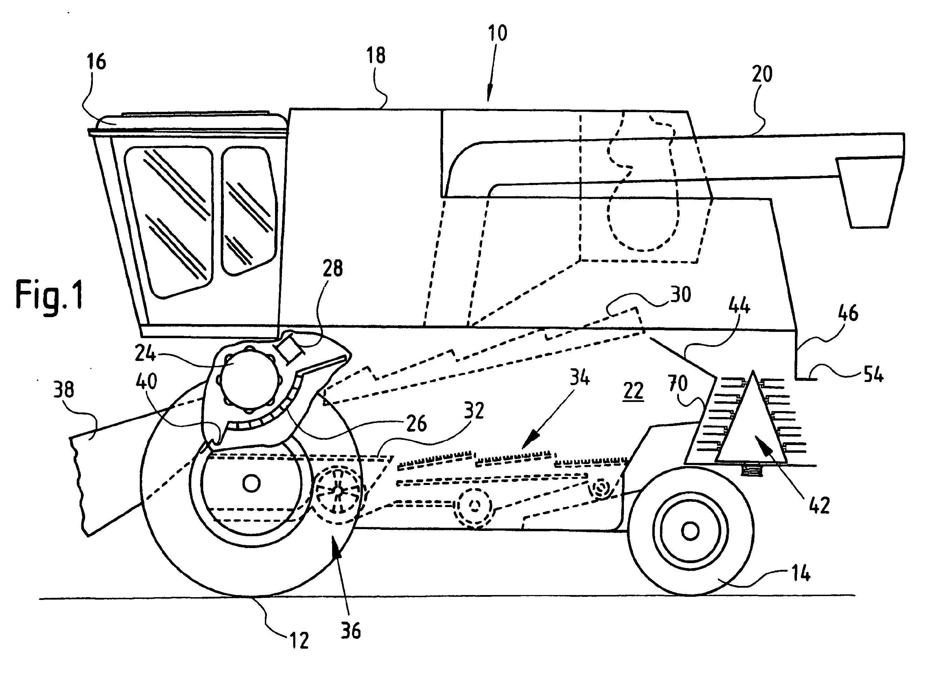

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 und ein Strohleitblech 44 einer unterhalb einer Strohausfallhaube 46 angeordneten Häckselvorrichtung 42 zugeführt werden und leichte Bestandteile mittels eines Gebläses 36 von den Sieben 34 auf den Boden geblasen werden. Es wäre auch denkbar, diese als Spreu bezeichneten Bestandteile ebenfalls der Häckseleinrichtung 42 zuzuführen, um sie über einen weiten Bereich auf dem Boden des Feldes zu verteilen. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

Die Häckselvorrichtung 42 kann an der Erntemaschine 10 schwenkbar oder verschiebbar befestigt sein, um sie zwecks Schwadablage oder zu Wartungszwecken in eine Außerbetriebsposition verbringen zu können.

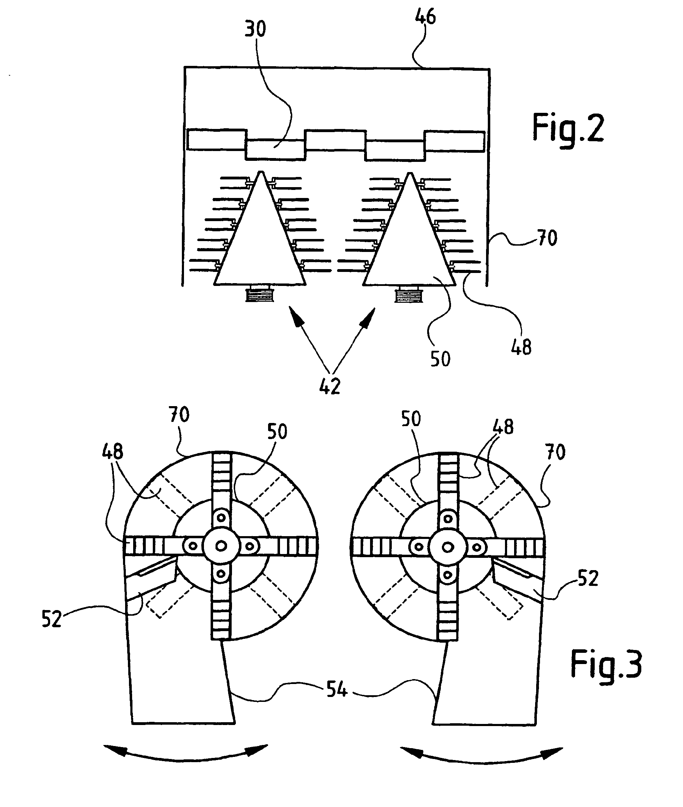

Die Häckselvorrichtung 42 ist in Figur 2 in rückwärtiger Ansicht detaillierter wiedergegeben. Sie umfasst zwei Rotoren, die jeweils aus einem zentralen, über seine gesamte Länge konischen Körper 50 mit pendelnd daran gelagerten Messern 48 bestehen, und ein Gehäuse 70, das die Rotoren umschließt. Die Messer 48 sind jeweils paarweise übereinander angeordnet. Die Körper 50 sind um vertikale Achsen, die ihren Längsachsen entsprechen, drehbar. Das erste, kleinere radiale Abmessungen aufweisende Ende des Körpers 50 ist jeweils oben angeordnet. Der Rotationsantrieb der Körper 50 ist in Figur 2 nicht dargestellt, jedoch in der Regel unterhalb der Körper 50 angeordnet. Er kann aus einem separaten (Hydraulik- oder Elektro-) Motor oder einer mechanischen Antriebsverbindung zum Hauptmotor des Mähdreschers 10 bestehen. Die Körper 50 sind an ihren unteren Enden drehbar am Gehäuse 70 gelagert. Eine Lagerung der Körper 50 an ihrem oberen Enden ist in der dargestellten Ausführungsform nicht vorgesehen, wäre aber mit einer sich beispielsweise über die Breite der Strohausfallhaube 46 erstreckenden, relativ schmalen Strebe, die den Fluss des Häckselguts möglichst wenig behindert, denkbar.

Im Betrieb werden die Körper 50 in Rotation versetzt, und ihnen von oben her, also in axialer Richtung, von den Strohschüttlern 30 (beziehungsweise von dem Trennrotor oder den Trennrotoren eines Axialmähdreschers) Häckselgut zugeführt. Die Konusform der Körper 50 und somit der äußeren Enden der Messer 48 bewirkt, dass die Umfangsgeschwindigkeit der Enden der Messer 48 dort, wo das Häckselgut aufgenommen wird, noch relativ gering ist, so dass keine große Richtungs- und/oder Geschwindigkeitsänderung, die eine Aufnahme des Häckselguts durch die Häckselvorrichtung 42 erschweren würde, stattfindet. Das Häckselgut wird somit problemlos aufgenommen. Die Umfangsgeschwindigkeit der Enden der Messer 48 steigt aber bei der - aufgrund der Wechselwirkung mit den Messern wendelförmigen - Bewegung des Häckselguts entlang der Häckselvorrichtung 42 an. Das Häckselgut wird somit beschleunigt und durch die Messer 48, die in Spiralform auf dem Körper 50 angebracht sind, im Zusammenwirken mit in Figur 3 dargestellten, am Gehäuse 70 befestigten Gegenmessern 52, die jeweils zwischen zwei Messern 48 eines Paares eingreifen, zerteilt.

Schließlich wird das Häckselgut durch rohrförmige, mit rechteckförmigem Querschnitt versehene Auswurfstutzen 54 ausgeworfen und auf dem Feld abgelegt. Die Auswurfstutzen 54 sind, wie in Figur 3 anhand der Pfeile erkennbar ist, um vertikale Achsen schwenkbar angeordnet. Die Auswurfstutzen 54 erstrecken sich, wie in Figur 1 dargestellt, über die gesamte Höhe der Körper 50. Es wäre aber auch denkbar, dass sie sich nur über einen Teil der Höhe der Körper 50 erstrecken und dabei im unteren Bereich der Körper 50 angeordnet sind, so dass das Häckselgut länger in der Häckselvorrichtung 42 verbleibt, bevor es ausgeworfen wird. Sie könnten sich beispielsweise über das untere Drittel erstrecken. Die beiden Körper 50 der Figur 3 drehen sich gegensinnig.

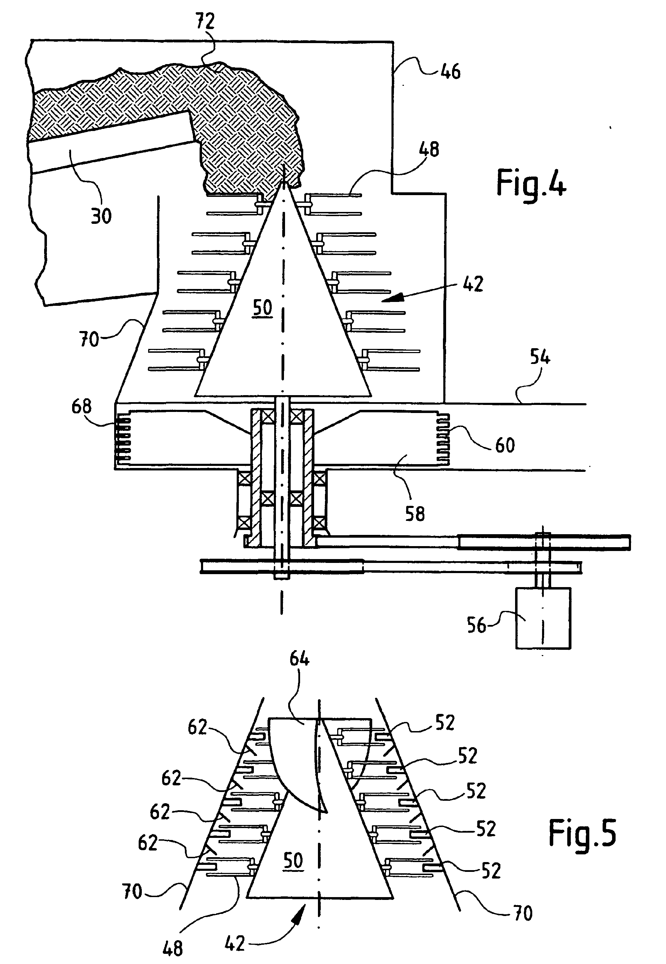

In Figur 4 ist eine zweite Ausführungsform der Erfindung dargestellt. Das Häckselgut 72 wird der Häckselvorrichtung 42 durch die Schüttler 30 direkt von oben, ohne Verwendung eines Strohleitblechs 44, wie es in Figur 1 dargestellt ist, zugeführt. Der Körper 50 und die daran angebrachten Messer 48 entsprechen denen der ersten Ausführungsform. Unterhalb des Körpers 50 ist jedoch ein Gebläse mit Schaufeln 58 angeordnet. Durch ein Getriebe 56 werden die Schaufeln 58 in Rotation versetzt; sie drehen sich um dieselbe vertikale Achse, um die sich auch der Körper 50 dreht. Der Körper 50 wird direkt über eine zentrale Welle angetrieben, während die Schaufeln 58 über eine die zentrale Welle umschließende, zu ihr koaxiale Hohlwelle in Drehung versetzt werden. Die Hohlwelle ist durch Lager drehbar am Gehäuse 70 abgestützt, und die zentrale Welle durch Lager an der Hohlwelle. Die Drehgeschwindigkeit der Schaufeln 58 ist wegen des Getriebes 56 höher als die des Körpers 50, um die Wurfwirkung zu verbessern. An der Außenseite der Schaufeln 58 sind Messer 60 vorgesehen, die mit Gegenmessern 68 des Gehäuses 70 zusammenwirken, um das Häckselgut 72 weiter zu zerkleinern. Die Schaufeln 58 fördern das Häckselgut 54 ebenfalls in Auswurfstutzen 54 mit rechteckförmigem Querschnitt, die um vertikale Achsen schwenkbar sind. Anzumerken ist, dass auf das Getriebe 56 verzichtet werden kann, falls die Schaufeln 58 und der Körper 50 mit gleicher Drehzahl angetrieben werden.

Eine dritte Ausführungsform der Erfindung ist schließlich in Figur 5 dargestellt. An der Oberseite des Körpers 50 der Häckselvorrichtung 42, die in ihrem grundsätzlichen Aufbau mit der in den Figuren 1 bis 3 gezeigten übereinstimmt, ist eine flügelförmige Einzugswendel 64 angebracht, die das Häckselgut in die Häckselvorrichtung 42 einzieht. Die Einzugswendel 64 ist ein schraubenförmig gebogenes Blech mit sich nach oben erweiterndem Durchmesser. Denkbar wäre auch, die Einzugswendel 64 sich nach oben verengend zu gestalten.

Als weiterer Unterschied zu den vorhergehenden Ausführungsformen sind Leitbleche 62 zu nennen, die an der Innenwand des Gehäuses 70 angeordnet sind, und das Häckselgut und Luft auf einer spiralförmigen Bahn vom Einlass an der Oberseite durch das Gehäuse 70 zum Auslass leiten, der in Figur 5 nicht dargestellt ist, aber beispielsweise in Form eines Auswurfstutzens 54 realisiert sein kann, wie er in Figur 1 und 4 illustriert ist.

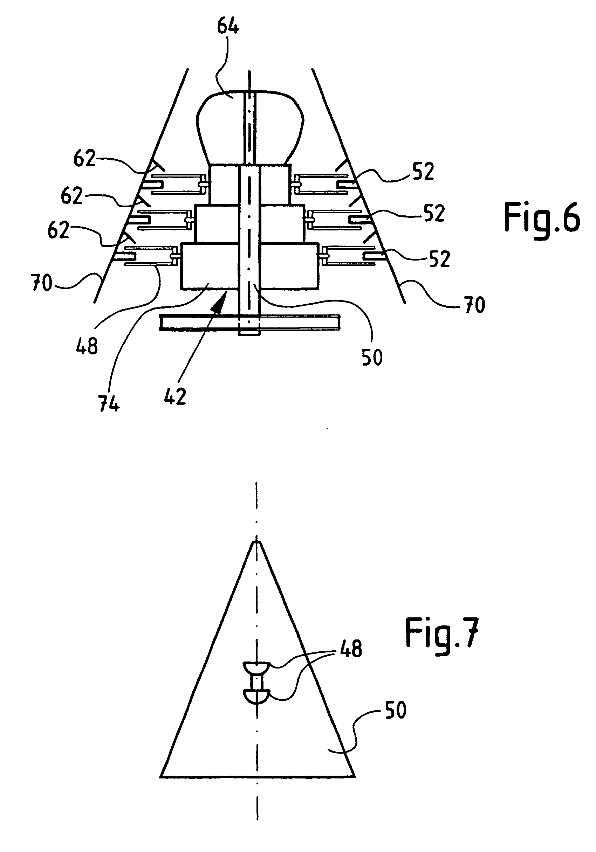

In Figur 6 ist eine vierte Ausführungsform einer erfindungsgemäßen Häckselvorrichtung dargestellt. Der Körper 50 ist nicht konisch ausgebildet, sondern zylindrisch. Er ist mit übereinander angeordneten Schaufeln 74 versehen, wie sie an sich aus der DE 197 53 486 A bekannt sind. An den Außenseiten der Schaufeln 74 sind die Messer 48 pendelnd aufgehängt. Die radialen Abmessungen der Schaufeln 74 verkürzen sich stufenweise, je höher eine jeweilige Schaufel 74 angebracht ist. Es ist auch denkbar, die Schaufeln 74 im Winkel zur Drehachse des Körpers 50 anzuordnen, um einen nach unten gerichteten Luftstrom zu erzeugen oder verstärken. Übereinander angeordnete Schaufeln 74 können in azimutaler Richtung versetzt sein. Die Einzugswendel 64 ist an der oberen äußeren Ecke abgerundet, und bildet somit keine spitze Kante, wie sie in Figur 5 dargestellt ist.

Figur 7 zeigt eine fünfte Ausführungsform der Erfindung, bei der die unteren Kanten der Messer 48 gekrümmt und die oberen Kanten flach sind. Die Messer 48 sind somit nach Art eines umgekehrten Flugzeugflügels geformt, was einen nach unten gerichteten Luftstrom zur Folge hat. Jede andere Form der Messer 48, die einen nach unten gerichteten Luftstrom zur Folge hat, ist ebenfalls wünschenswert. Als Beispiel seien V- oder bogenförmige Messer 48 genannt, oder in sich tordierte (um ihre Längsachse in sich gebogene) Messer 48. Die Messer 48 sind derart angeordnet, dass ihre angeschliffene Seite in Stromrichtung zeigt. Dadurch werden die gehäckselten Partikel von den Messern 48 in Stromrichtung abgegeben.

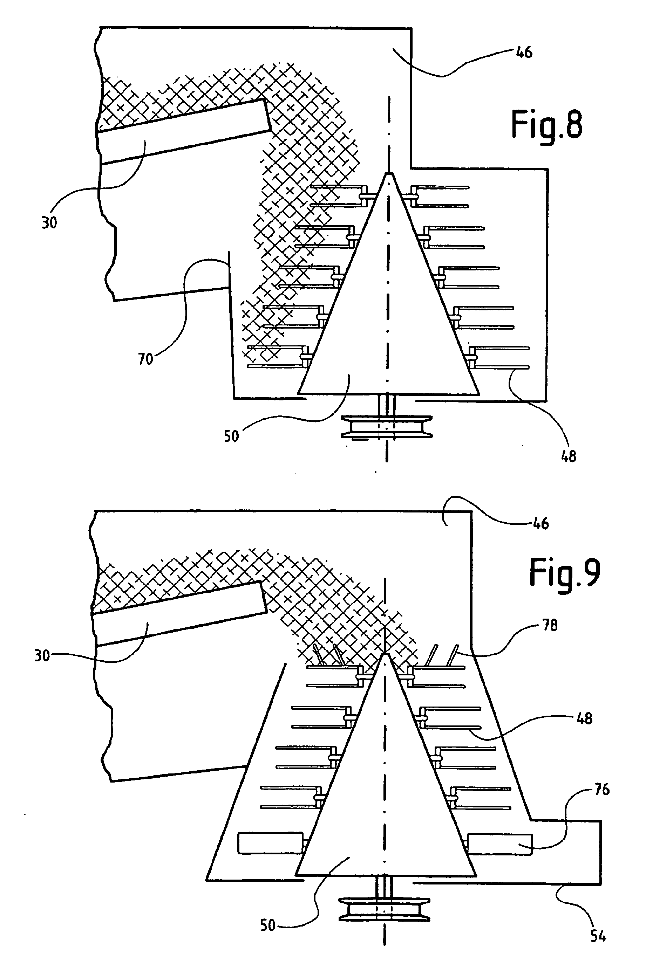

In Figur 8 ist eine weitere Ausführungsform der Erfindung dargestellt, die im wesentlichen mit der ersten, in den Figuren 1 bis 3 dargestellten Ausführungsform übereinstimmt. Im Unterschied dazu ist die vordere Wand des Gehäuses 70 jedoch etwa vertikal nach oben gezogen. Der Spalt zwischen Gehäuse 70 und dem Körper 50 mit den Messern 48 ist am Einlass des Gehäuses 70 somit relativ groß und verengt sich kontinuierlich nach unten. Auf diese Weise kann das zu häckselnde Material unproblematisch eingezogen werden. Der Körper 50 mit den Messern 48 nimmt das Gut aus seitlicher Richtung an.

In Figur 9 ist schließlich eine siebte Ausführungsform einer erfindungsgemäßen Häckseleinrichtung wiedergegeben, deren oberer Teil mit der ersten Ausführungsform fast übereinstimmt. Allerdings sind messerartige Schneidelemente 70 an den obersten Messern 48 angebracht, die zum Abfräsen des annähernd axial zugeführten Materials dienen und das Einziehen des Materials in die Häckseleinrichtung erleichtern. An der Unterseite des Körpers 50 sind Auswurfschaufeln 76 angebracht, die das gehäckselte Material in einen ihnen benachbarten Auswurfstutzen 54 auswerfen. Sie erzeugen außerdem einen tangentialen, zum Auswurfstutzen gerichteten Luftstrom.

## Patentansprüche

1. Häckselvorrichtung (42) mit mehreren Messern (48), die an einem drehbaren, innerhalb eines Gehäuses (70) angeordneten Körper (50) befestigt sind, wobei die radial äußeren Enden der Messer (48) an einer ersten Position des Körpers (50) weniger weit von der Drehachse des Körpers (50) beabstandet sind als an einer zweiten, von der ersten Position beabstandeten Position des Körpers (50), **dadurch gekennzeichnet, dass** die Messer (48) auf dem Körper (50) derart axial und azimutal versetzt angeordnet sind, dass sich in Drehrichtung eine zum Ende des Konus, das die größere radiale Abmessung aufweist, gerichtete Wendel ergibt.

2. Häckselvorrichtung nach Anspruch 1, **dadurch gekennzeichnet, dass** die radial äußeren Enden der Messer (48) in der Form eines Konus angeordnet sind.

3. Häckselvorrichtung nach Anspruch 1 oder 2, **dadurch gekennzeichnet, dass** der Körper (50) und/oder die Messer (48) mit dem Körper (50) verbindende Halterungselemente konisch ist oder sind.

4. Häckselvorrichtung (42) nach einem der Ansprüche 1 bis 3, **dadurch gekennzeichnet, dass** die Drehachse des Körpers (50) zumindest näherungsweise vertikal oder geneigt ist.

5. Häckselvorrichtung (42) nach einem der Ansprüche 1 bis 4, **dadurch gekennzeichnet, dass** das Gehäuse (70) an dem Ende des Konus, das die kleinere radiale Abmessung aufweist, mit einer Zuführöffnung zum axialen oder radialen oder tangentialen Zuführen von Häckselgut (72) versehen ist.

6. Häckselvorrichtung (42) nach einem der Ansprüche 1 bis 5, **dadurch gekennzeichnet, dass** die Gutzufuhr zwischen dem Umfang des Körpers (50) und des Gehäuses (70) erfolgt.

7. Häckselvorrichtung (42) nach einem der Ansprüche 1 bis 6, **dadurch gekennzeichnet, dass** am eingangsseitigen Ende des Körpers (50) Schneidelemente (78) angeordnet sind, die zum Abfräsen des zugeführten Materials dienen.

8. Häckselvorrichtung (42) nach einem der Ansprüche 1 bis 7, **dadurch gekennzeichnet, dass** das Gehäuse (70) einen Auswurfstutzen (54) zum Auswurf gehäckselten Häckselguts (72) aufweist, der vorzugsweise dem Ende des Konus, das die größere radiale Abmessung aufweist, benachbart ist.

9. Häckselvorrichtung (42) nach Anspruch 8, **dadurch gekennzeichnet, dass** der Körper (50) mit den Messern (48) und das Gehäuse (70) derart geformt sind, dass eine zum Auswurfstutzen (54) gerichtete tangentiale Strömung entsteht.

10. Häckselvorrichtung nach Anspruch 8 oder 9, **dadurch gekennzeichnet, dass** der Auswurfstutzen (54) um eine vorzugsweise vertikale Achse schwenkbar ist.

11. Häckselvorrichtung nach einem der Ansprüche 1 bis 10, **dadurch gekennzeichnet, dass** wenigstens zwei Körper (50) mit daran befestigten Messern (48) seitlich nebeneinander angeordnet sind, und dass die Drehachsen der Körper (50) parallel oder relativ zueinander geneigt sind.

12. Häckselvorrichtung (42) nach einem der vorhergehenden Ansprüche, **dadurch gekennzeichnet, dass** dem Ende des Konus, das die größere radiale Abmessung aufweist, Auswurfschaufeln (76) angebracht sind und/oder ein Gebläse mit Schaufeln (58) benachbart ist, die um die Drehachse des Körpers (50) drehbar sind.

13. Häckselvorrichtung (42) nach Anspruch 12, **dadurch gekennzeichnet, dass** die Länge und/oder Lage der Auswurfschaufeln (76) manuell und/oder fernbedient und/oder selbsttätig verstellbar ist.

14. Häckselvorrichtung (42) nach Anspruch 12 oder 13, **dadurch gekennzeichnet, dass** die Auswurfschaufeln (76) einem Auswurfstutzen (54) benachbart sind.

15. Häckselvorrichtung (42) nach einem der Ansprüche 12 bis 14, **dadurch gekennzeichnet, dass** die Schaufeln (58) mit anderer Drehzahl rotieren als der Körper (50).

16. Häckselvorrichtung (42) nach Anspruch 15, **gekennzeichnet durch** ein zwischen Körper (50) und Schaufeln (58) angeordnetes Getriebe (56).

17. Häckselvorrichtung (42) nach einem der Ansprüche 12 bis 16, **dadurch gekennzeichnet, dass** an der Außenseite mindestens einer der Schaufeln (58) wenigstens ein Messer (60) angebracht ist, das vorzugsweise mit einem am Gehäuse (70) befestigten Gegenmesser (68) zusammenwirkt.

18. Häckselvorrichtung (42) nach einem der Ansprüche 12 bis 17, **dadurch gekennzeichnet, dass** das Gebläse einen Luftstrom in axialer Richtung erzeugt.

19. Häckselvorrichtung (42) nach einem der vorhergehenden Ansprüche, **dadurch gekennzeichnet, dass** die Messer (48) derart geformt sind, dass sie einen axialen Luftstrom erzeugen.

20. Häckselvorrichtung (42) nach einem der vorhergehenden Ansprüche, **gekennzeichnet durch** eine am Ende des Konus, das die kleinere radiale Abmessung aufweist, angeordnete Einzugswendel (64) zum Einzug des Häckselguts.

21. Häckselvorrichtung (42) nach einem der vorhergehenden Ansprüche, **dadurch gekennzeichnet, dass** das Gehäuse (70) zumindest abschnittsweise der Form des Konus angepasst ist.

22. Häckselvorrichtung (42) nach einem der vorhergehenden Ansprüche, **dadurch gekennzeichnet, dass** an der Innenseite des Gehäuses (70) Leitbleche (62) angebracht sind, die Häckselgut (72) und/oder Luft in axialer Richtung leiten.

23. Mähdrescher (10) mit einer Häckselvorrichtung (42) nach einem der vorhergehenden Ansprüche.

24. Mähdrescher (10) nach Anspruch 23, **dadurch gekennzeichnet, dass** zwischen den Strohschüttlern (30) oder Trennrotoren des Mähdreschers (10) und der Häckselvorrichtung (42) kein angetriebenes Förderelement angeordnet ist.

## Claims

1. Chopping device (42) having a plurality of knives (48) which are secured to a rotatable body (50) arranged inside a housing (70), the radially outer ends of the knives (48) at a first position of the body (50) being spaced at a smaller distance from the axis of rotation of the body (50) than at a second position of the body (50) which is spaced apart from the first position, **characterised in that** the knives (48) are arranged offset axially and azimuthally on the body (50) in such a way that in the direction of rotation a helix is produced which is directed towards the end of the cone which has the greater radial measurement.

2. Chopping device according to claim 1, **characterised in that** the radially outer ends of the knives (48) are arranged in the shape of a cone.

3. Chopping device according to claim 1 or 2, **characterised in that** the body (50) and/or mounting elements connecting the knives (48) to the body (50) is or are conical.

4. Chopping device (42) according to one of claims 1 to 3, **characterised in that** the axis of rotation of the body (50) is at least approximately vertical or inclined.

5. Chopping device (42) according to one of claims 1 to 4, **characterised in that** the housing (70) is provided, at the end of the cone which has the smaller radial measurement, with a supply opening for supplying chopped material (72) axially or radially or tangentially.

6. Chopping device (42) according to one of claims 1 to 5, **characterised in that** the material is supplied between the circumference of the body (50) and the housing (70).

7. Chopping device (42) according to one of claims 1 to 6, **characterised in that** cutting elements (78), which are used for milling the supplied material, are arranged at the input end of the body (50).

8. Chopping device (42) according to one of claims 1 to 7, **characterised in that** the housing (70) has an ejection duct (54) for ejecting chopped material (72), which is preferably adjacent to the end of the cone which has the larger radial measurement.

9. Chopping device (42) according to claim 8, **characterised in that** the body (50) with the knives (48) and the housing (70) are shaped in such a way that a tangential flow directed towards the ejection duct (54) is produced.

10. Chopping device according to claim 8 or 9, **characterised in that** the ejection duct (54) can be pivoted about a preferably vertical axis.

11. Chopping device according to one of claims 1 to 10, **characterised in that** at least two bodies (50) with knives (48) fastened to them are arranged side by side, and **in that** the axes of rotation of the bodies (50) are parallel or inclined relative to one another.

12. Chopping device (42) according to one of the preceding claims, **characterised in that** ejection blades (76) are attached to the end of the cone which has the larger radial measurement, and/or a fan is adjacent with blades (58) which may be rotated about the axis of rotation of the body (50).

13. Chopping device (42) according to claim 12, **characterised in that** the length and/or position of the ejection blades (76) may be adjusted manually and/or by remote control and/or automatically.

14. Chopping device (42) according to claim 12 or 13, **characterised in that** the ejection blades (76) are adjacent to an ejection duct (54).

15. Chopping device (42) according to one of claims 12 to 14, **characterised in that** the blades (58) rotate at a different speed from the body (50).

16. Chopping device (42) according to claim 15, **characterised by** a gearbox (56) arranged between the body (50) and the blades (58).

17. Chopping device (42) according to one of claims 12 to 16, **characterised in that** on the outside of at least one of the blades (58) there is attached at least one knife (60) which preferably cooperates with a shear bar (68) secured to the housing (70).

18. Chopping device (42) according to one of claims 12 to 17, **characterised in that** the fan generates an airflow in an axial direction.

19. Chopping device (42) according to one of the preceding claims, **characterised in that** the knives (48) are shaped in such a way that they generate an axial airflow.

20. Chopping device (42) according to one of the preceding claims, **characterised by** an intake helix (64) for drawing in the chopped material and arranged at the end of the cone which has the smaller radial measurement.

21. Chopping device (42) according to one of the preceding claims, **characterised in that** the housing (70) is adapted at least in sections to the shape of the cone.

22. Chopping device (42) according to one of the preceding claims, **characterised in that** guide vanes (62), which guide chopped material (72) and/or air in an axial direction, are attached to the inside of the housing (70).

23. Combine harvester (10) which has a chopping device (42) according to one of the preceding claims.

24. Combine harvester (10) according to claim 23, **characterised in that** no driven conveying element is arranged between the straw rockers (30) or separating rotors of the combine harvester (10) and the chopping device (42).

## Revendications

1. Dispositif de hachage (42) comportant plusieurs lames de coupe (48) qui sont montées rotatives sur un corps (50) rotatif à l'intérieur d'un carter (70), les extrémités radialement extérieures des lames de coupe (48) étant, dans une première position du corps (50), moins écartées de l'axe de rotation du corps (50) que dans une deuxième position du corps (50), écartée de la première position, **caractérisé en ce que** les lames de coupe (48) sont agencées sur le corps (50) en étant décalées dans le sens axial et azimutal de manière à former dans le sens de rotation une spirale orientée vers l'extrémité du cône avec la plus grande dimension radiale.

2. Dispositif de hachage (42) selon la revendication 1, **caractérisé en ce que** les extrémités radialement extérieures des lames de coupe (48) sont agencées en formant un cône.

3. Dispositif de hachage (42) selon la revendication 1 ou 2, **caractérisé en ce que** le corps (50) et/ou les lames de coupe (48) avec des éléments de fixation les assemblant au corps (50) est ou sont conique(s).

4. Dispositif de hachage (42) selon l'une quelconque des revendications 1 à 3, **caractérisé en ce que** l'axe de rotation du corps (50) est au moins à peu près vertical ou incliné.

5. Dispositif de hachage (42) selon l'une quelconque des revendications 1 à 4, **caractérisé en ce que** le carter (70), au niveau de l'extrémité du cône avec la plus petite dimension radiale, est muni d'un orifice d'admission pour l'acheminement axial ou radial ou tangentiel du produit à hacher (72).

6. Dispositif de hachage (42) selon l'une quelconque des revendications 1 à 5, **caractérisé en ce que** le produit est acheminé entre la périphérie du corps (50) et le carter (70).

7. Dispositif de hachage (42) selon l'une quelconque des revendications 1 à 6, **caractérisé en ce que**, au niveau de l'extrémité d'entrée du corps (50), sont agencés des éléments de coupe (78) qui tranchent le produit acheminé.

8. Dispositif de hachage (42) selon l'une quelconque des revendications 1 à 7, **caractérisé en ce que** le carter (70) comporte une tubulure d'éjection (54), par laquelle le produit haché (72) est éjecté et laquelle est montée de préférence au voisinage de l'extrémité du cône avec la plus grande dimension radiale.

9. Dispositif de hachage (42) selon la revendication 8, **caractérisé en ce que** le corps (50) avec les lames de coupe (48) et le carter (70) sont formés de manière à engendrer un flux tangentiel orienté vers la tubulure d'éjection (54).

10. Dispositif de hachage (42) selon la revendication 8 ou 9, **caractérisé en ce que** la tubulure d'éjection (54) est propre à pivoter autour d'un axe de préférence vertical.

11. Dispositif de hachage (42) selon l'une quelconque des revendications 1 à 10, **caractérisé en ce qu'**au moins deux corps (50), sur lesquels sont fixées des lames de coupe (48), sont agencés côte à côte, et **en ce que** les axes de rotation des corps (50) sont parallèles ou inclinés l'un par rapport à l'autre.

12. Dispositif de hachage (42) selon l'une quelconque des revendications précédentes, **caractérisé en ce que** des pales d'éjection (76) sont agencées au niveau de l'extrémité du cône avec la plus grande dimension radiale et/ou un ventilateur avec des pales (58), qui sont aptes à tourner autour de l'axe de rotation du corps (50), est agencé à proximité de ladite extrémité.

13. Dispositif de hachage (42) selon la revendication 12, **caractérisé en ce que** la longueur et la position des pales d'éjection (76) sont réglables manuellement et/ou par télécommande et/ou automatiquement.

14. Dispositif de hachage (42) selon la revendication 12 ou 13, **caractérisé en ce que** les pales d'éjection (76) sont adjacentes à une tubulure d'éjection (54).

15. Dispositif de hachage (42) selon l'une quelconque des revendications 12 à 14, **caractérisé en ce que** les pales (58) tournent à une vitesse de rotation différente de celle du corps (50).

16. Dispositif de hachage (42) selon la revendication 15, **caractérisé en ce qu'**un engrenage (56) est monté entre le corps (50) et les pales (58).

17. Dispositif de hachage (42) selon l'une quelconque des revendications 12 à 16, **caractérisé en ce que** sur la face extérieure d'au moins une des pales (58) est agencée au moins une lame de coupe (60), qui coopère de préférence avec une lame complémentaire (68) fixée contre le carter (70).

18. Dispositif de hachage (42) selon l'une quelconque des revendications 12 à 17, **caractérisé en ce que** le ventilateur génère un flux d'air dans le sens axial.

19. Dispositif de hachage (42) selon l'une quelconque des revendications précédentes, **caractérisé en ce que** les lames de coupe (48) sont formées de telle sorte qu'elles génèrent un flux d'air dans le sens axial.

20. Dispositif de hachage (42) selon l'une quelconque des revendications précédentes, **caractérisé par** une vis d'admission (64), qui est destinée à introduire le produit à hacher et qui est agencée au niveau de l'extrémité du cône avec la plus petite dimension radiale.

21. Dispositif de hachage (42) selon l'une quelconque des revendications précédentes, **caractérisé en ce que** le carter (70), au moins par zones, est adapté à la forme du cône.

22. Dispositif de hachage (42) selon l'une quelconque des revendications précédentes, **caractérisé en ce que** des tôles de guidage (62) sont agencées sur la face intérieure du carter (70) et guident le produit à hacher (72) et/ou l'air dans le sens axial.

23. Moissonneuse-batteuse (10) comportant un dispositif de hachage (42) selon l'une quelconque des revendications précédentes.

24. Moissonneuse-batteuse (10) selon la revendication 23, **caractérisée en ce qu'**aucun élément de convoyage entraîné n'est agencé entre les secoueurs de paille (30) ou les rotors de séparation de la moissonneuse-batteuse (10) et le dispositif de hachage (42).
